# Europäisches Patentamt

# European Patent Office

# Office européen des brevets

(11) Publication number: **0 120 518**
**B1**

(12) **EUROPEAN PATENT SPECIFICATION**

(45) Date of publication of patent specification: **11.11.87**

(21) Application number: **84200245.3**

(22) Date of filing: **22.02.84**

(51) Int. Cl.⁴: **G 11 B 25/06, G 11 B 5/48,**
**G 11 B 15/62, G 11 B 5/50,**
**G 11 B 5/55, G 11 B 5/56**

(54) **Magnetic-tape-cassette apparatus and magnetic-head unit for use in such apparatus.**

(30) Priority: **28.02.83 NL 8300730**

(43) Date of publication of application:
**03.10.84 Bulletin 84/40**

(45) Publication of the grant of the patent:
**11.11.87 Bulletin 87/46**

(84) Designated Contracting States:
**CH DE FR GB IT LI NL**

(56) References cited:
**EP-A-0 063 398**
**CH-A- 262 323**
**DE-A-1 499 653**
**DE-A-2 837 888**
**FR-A-1 301 903**
**GB-A-1 523 385**
**US-A-3 297 268**
**US-A-3 767 209**
**US-A-3 882 543**
**US-A-4 167 664**
**PATENTS ABSTRACTS OF JAPAN, vol. 5, no.
84 (P-64)756r, 2nd June 1981; & JP - A - 56 29
821 (NIPPON DENKI K.K.) 25-03-1981**

(73) Proprietor: **N.V. Philips' Gloeilampenfabrieken
Groenewoudseweg 1
NL-5621 BA Eindhoven (NL)**

(72) Inventor: **Schoenmakers, Johannes Joseph
Martinus
c/o INT. OCTROOIBUREAU B.V. Prof. Holstlaan 6
NL-5656 AA Eindhoven (NL)**

(74) Representative: **Smit, Frederik Jan et al
INTERNATIONAAL OCTROOIBUREAU B.V. Prof.
Holstlaan 6
NL-5656 AA Eindhoven (NL)**

(56) References cited:
**PATENTS ABSTRACTS OF JAPAN, vol. 3, no.
25 (E-94), 28th February 1979; & JP - A - 54 2709
(MATSUSHITA DENKI SANGYO K.K.) 10-01-
1979**

**IBM TECHNICAL DISCLOSURE BULLETIN, vol.
9, no. 12, May 1967, page 1711, Armonk, N.Y.,
US; G.D. McNECE: "Record belt aligning drive
roller"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 120 518**

(58) References cited:
PATENTS ABSTRACTS OF JAPAN, vol. 4, no. 184 (P-41)666r, 18th December 1980; & JP - A - 55 125 528 (SONY K.K.) 27-09-1980

PATENTS ABSTRACTS OF JAPAN, vol. 5, no. 202 (P-95)874r, 22nd December 1981; & JP - A - 56 124 115 (TOKYO SHIBAURA DENKI K.K.) 29-09-1981

PATENTS ABSTRACTS OF JAPAN, vol. 1, no. 107, 21st September 1977, page 3687 E 77; & JP - A - 52 40 115 (AKAI DENKI K.K.) 28-03-1977

PATENTS ABSTRACTS OF JAPAN, vol. 4, no. 39 (P-4)521r, 28th March 1980, page 144 P 4; & JP - A - 55 12 593 (MITSUMI DENKI K.K.) 29-01-1980

PATENTS ABSTRACTS OF JAPAN, vol. 6, no. 162 (P-137)1040r, 25th August 1982; & JP - A - 57 78 620 (PIONEER K.K.) 17-05-1982

## Description

The invention relates to a magnetic-tape cassette apparatus comprising a head mounting plate, a magnetic head unit carried on said plate, said unit comprising a magnetic head having a cylindrically curved head face in which at least one air gap terminates; said magnetic head unit further comprising a head mount including two tape guides, arranged one to each side of the air gap in the direction of tape transport, said guides each having a cylindrically curved guide surface and a height limiter at an axial end of the guide surface said height limiters adjoining the respective guide surfaces along a line through the two height limiters said line being perpendicular to a plane through the air gap perpendicular to the head face at the air gap and control means disposed at the other axial ends of the guide surfaces for guiding a lateral tape edge so as to cause the other lateral tape edge to be maintained in constant contact with the respective height limiter during tape transport and means for transporting a magnetic tape past said magnetic head and over said tape guide.

A magnetic-tape-cassette apparatus of this type is disclosed in EP—A—0 063 398. In this known magnetic-tape-cassette apparatus azimuth errors, *i.e.* errors which occur due to the position of the air gap deviating from a perfectly perpendicular position relative to the edges of the magnetic tape, can be reduced to a level such that they have no undesired effect. For this, it is important that the aforesaid line through to the two height limiters should extend perpendicularly to the median plane through the air gap. The advantage of this construction is that no further adjustment of the head unit is necessary during manufacture of the magnetic-tape cassette apparatus. Another important advantage is that the transverse position of the track on the magnetic tape relative to the air gap can be maintained accurately during tape transport. These steps enable magnetic-tape cassettes containing recording made on one magnetic-tape cassette apparatus to be played back on another apparatus without reproduction errors. The control means at the ends of the guide surfaces in the known magnetic-tape cassette apparatus comprise two blade springs which are each situated at and biassed against an axial end of an associated tape guide. It has been found that the arrangement of these blade springs and the spring constant must be chosen carefully to ensure that the control means provide the desired effect.

It is an object of the invention to provide a magnetic-tape cassette apparatus of the aforementioned type having a construction which enables the desired guidance of the magnetic tape across the magnetic head unit to be easily achieved, and which also functions correctly after a longer time.

To this end the invention is characterized in that said control means comprise an obliquely disposed control edge adjoining each of the respective guide surfaces arranged such that the distance from the control edge of the tape guide to the respective height limiter decreases in a direction toward the guide surface, each guide surface has a maximum axial dimension, from the height limiter to the intersection of the control edge with the guide surface which equals the minimum width of the magnetic tape, and said control edges, guide surfaces and height limiters form an integral unit with the head mount.

This enables the head mount to be manufactured as one piece, so that no lateral adjustments of part of the head mount are necessary. The only adjustment required is the adjustment of the magnetic head so that the air gap is exactly perpendicular to the line through the two height limiters at the junctions between the guide surfaces and the height limiters. The correct position of the magnetic head with the air gap relative to the tape guides after the adjustment can be maintained by applying a fixing material between the walls of the magnetic head and the head mount. This not only provides a possibility of eliminating azimuth errors of the magnetic-head unit in a passive manner but also enables the mounting of the magnetic-head unit in a magnetic-tape cassette apparatus to be carried out with a minimum of labour and at a competitive price compared with conventional techniques.

If the tape edge tends to drift away from the height limiters the inclined control edges immediately correct its position, thereby ensuring a constant contact of the tape edge with the height limiters. This is achieved with a minimal force, so that curling-over of the tape edge as a result of the pressure with which it is urged against the height limiters is precluded.

The axial dimension of each guide surface from the associated control edge to the associated height limiter is at most equal to a prescribed minimum width. In practice the width of magnetic tapes exhibits a tolerance. This step ensures that if the width of a magnetic tape is greater than a prescribed minimum width the control edges will have a corrective action of the magnetic tape and produce a resultant force which is directed towards the height limiters.

It is known from US—A—3.297.268 to provide a guide comprising two diverging control surfaces which are arranged one to each side of a magnetic head in the width direction of the tape in order to cause the head to accurately scan the tapetracks. The head face of the head is located at the base of the control surfaces and has to engage the whole width of the tape. In order to prevent curing of the tape at the location of said head face it is necessary that the minimum spacing between the control surfaces is at least equal to the maximum width of the tape. Thus this known guide cannot function as a height limiter and control edge, for cancelling any azimuth error.

It is known from IBM Technical Disclosure Bulletin, Vol. 9, No. 12, May 1967, page 1711 to provide a drive roller at the axial ends with a height limiter and a control surface. The axial

dimension of the roller between the height limiter and the control surface is slightly less than the width of the tape driven by this roller for maintaining a pressure on the tape towards the height limiter. Although the axial position of the tape in relation to the drive roller can be accurate, the separate mounting of the roller and a magnetic head to a chassis requires a special azimuth adjustment of the magnetic head during manufacturing of the apparatus. This adjustment is complex mechanically in view of the tolerances, especially those between the roller and the chassis.

One embodiment of a magnetic-tape cassette apparatus in accordance with the invention is characterized in that the head mount comprises a base portion and two side walls, said side walls being upright relative to said plate and comprising centring edges of the facing sides of the walls, said centring edges extending substantially perpendicular relative to a plane tangent to the head face at the location of the air gap and disposed at a distance from each other which is smaller than that between other portions of said side walls. In principle it is desirable to make the distance between the inner sides of the upright walls of the head mount slightly greater than the width of the magnetic head in order to avoid the upright side walls of the head mount being deflected outwards during the adjustment of the head relative to the mount. During this adjustment the centring edges create a slight friction between the magnetic head and the head mount, which facilitates the adjustment.

Another embodiment of a magnetic-tape-cassette apparatus in accordance with the invention is characterized in that said head mount, guide surfaces, height limiters and control edges are formed by a unitary plastic molding, and said magnetic head is retained in position within said head mount by glue. This enables the parts of the head mount such as the control edges, the guide surfaces and the height limiters to be formed accurately in a simple manner. Further this enables the fixing of the magnetic head within the head mount such that the correct position of the head is guaranteed. It has been found that even with some wear of the control edges the corrective effect of the position of the tape edge is maintained if the control surfaces extend obliquely towards the guide surfaces.

Another embodiment of a magnetic-tape cassette apparatus in accordance with the invention is characterized in that the head mounting plate comprises elastic clamping means, and the head mount comprises fixing members arranged for engagement by said elastic clamping means to fix the head mount to the plate. By providing the integrated head mount with integral fixing members it is also possible to clamp the magnetic-head unit on the head-mounting plate after the adjustment of the magnetic head in the head mount, the clamping means ensuring that the magnetic-head unit occupies the correct position on the head-mounting plate.

The magnetic-tape cassette apparatus in accordance with the invention also allows the air gap to be adjusted relative to the track on the tape while maintaining the correct adjustment of the air gap of the magnetic head relative to the tape guides. For this purpose a further embodiment is characterized in that the head mount is mounted to the head mounting plate by means for rotating the head mount about an axis perpendicular to a plane tangent to the head face, through a range of rotation of 180°, and said mounting means includes two stops for defining limits of said range of rotation. By use of the integrated head mount it is comparatively simple to provide rotation means and stops which ensure that accurately defined end positions are obtained.

Another embodiment of the invention is characterized in that the magnetic head has a wall extending substantially parallel to said plate, said wall having a wall portion disposed at a smaller distance from the head air gap than the rest of said wall, and said head mount comprises a base portion positioned at least partly against said wall portion. These steps enable a magnetic-tape cassette apparatus having a magnetic head which was positioned by means of conventional techniques to be adapted to the system in accordance with the invention without basically modifying the construction of the apparatus. For example, it is possible to form a stepped portion in the relevant side of the magnetic head, for example by grinding, so that when the head mount has been fitted the overall height of the magnetic-head unit is not altered significantly. This may be important in view of the generally limited space which is available around the magnetic heads of existing apparatuses.

A preferred embodiment of a magnetic-head unit in accordance with the invention is characterized in that viewed perpendicularly to a plane tangent to the head face at the location of the air gap, the head mount surrounds the magnetic head on four sides. In spite of its small external dimensions such a head mount is sufficiently rigid to ensure that the head, once it has been adjusted, is retained in the correct position in the head mount.

The invention further relates to a magnetic head unit suitable for use in such a magnetic-tape cassette apparatus.

Embodiments of the invention will now be described in more detail, by way of example, with reference to the drawings, in which

Figure 1 is a plan view of a magnetic-tape-cassette apparatus incorporating a first embodiment of the invention, a part of the apparatus housing being cut away to show the parts which are relevant to the invention;

Figure 2 is a view on an enlarged scale looking in the direction of the arrow II in Fig. 1;

Figure 3 is a view on an enlarged scale looking in the direction of the arrow III;

Figure 4 is an exploded perspective view on an enlarged scale of the magnetic-head unit and head-mounting plate shown in Figs. 2 and 3;

Figure 5 is a front elevation of a magnetic-head unit of a second embodiment of the invention;

Figure 6 is a perspective view of the head mount of the head unit shown in Fig. 5;

Figure 7 is a view similar to Fig. 3 of a magnetic-head unit and head-mounting plate of a third embodiment of the invention;

Figure 8 is an exploded perspective view of the magnetic-head unit and head-mounting plate shown in Fig. 7;

Figure 9 is a perspective view of a magnetic-head unit and head-mounting plate of a fourth embodiment of the invention;

Figure 10 is a side view of the magnetic-head unit and head-mounting plate shown in Fig. 9;

Figure 11 is a view similar to Fig. 10 showing a modification of the magnetic-head unit of Figs. 9 and 10;

Figure 12 is a front perspective view of a magnetic-head unit and head-mounting plate of a further embodiment of the invention; and

Figure 13 is a rear perspective view of the magnetic-head unit and head-mounting plate as shown in Fig. 12.

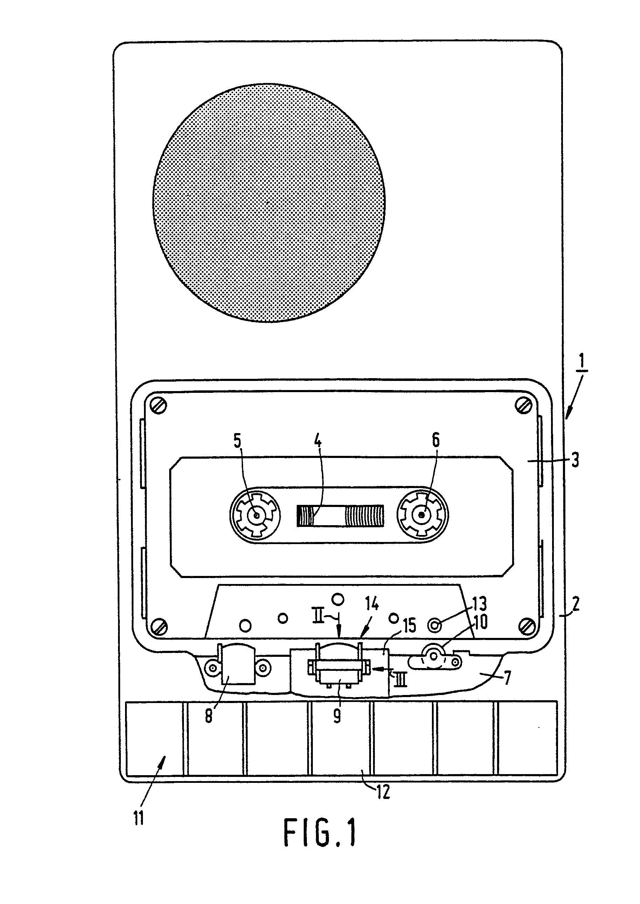

The magnetic-tape cassette apparatus shown in Fig. 1 comprises a housing 2 into which a magnet-tape cassette 3 can be inserted. The magnetic-tape cassette contains a length of magnetic tape 4 which is wound around two hubs, not shown. During operation the hubs are coupled to winding mandrels 5 and 6 of the apparatus 1.

The apparatus 1 further comprises a head-mounting plate 7 which is guided inside the housing 2 and which carries a magnetic erase head 8, a combined recording/playback head 9 and a pressure roller 10. The apparatus 1 is also provided with a number of control buttons 11, *inter alia*, a playback 12. Depression of the button 12 causes the head-mounting plate 7 to be moved towards the cassette 3, the magnetic heads 8 and 9 at least partly entering the cassette through front openings, not shown, so that the magnetic tape 4 is positioned against the heads 8 and 9.

The apparatus 1 further comprises a capstan 13, which rotates when the button 12 is depressed. The transport of the tape past the magnetic heads is started by the pressure roller 10 being moved forward to press the tape against the capstan 13.

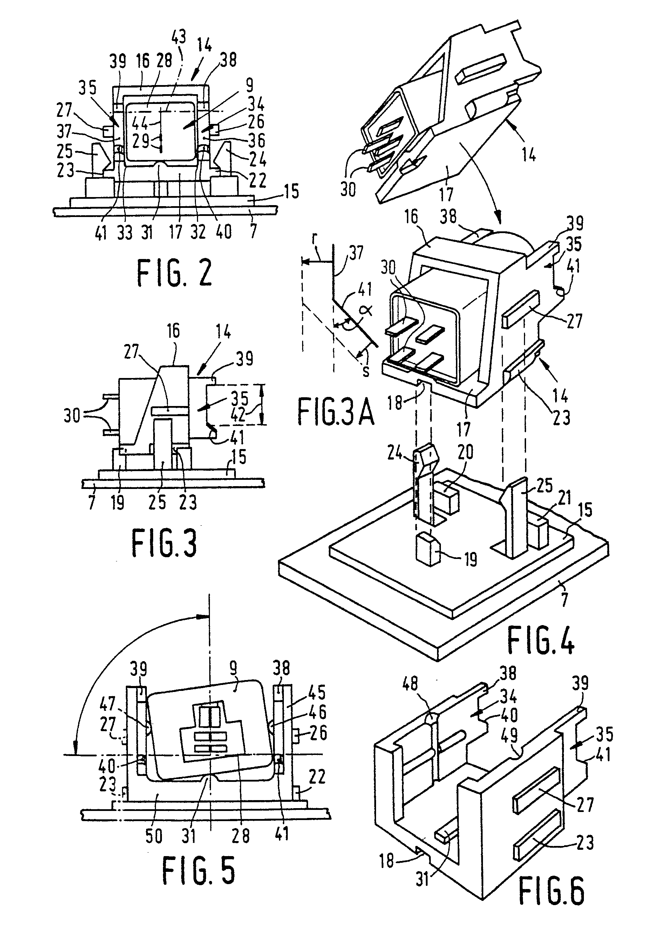

The magnetic head 9, which forms part of a magnetic-head unit 14, is mounted on a plate portion 15 of the head-mounting plate 7. As is shown in more detail in Figs. 2, 3 and 4 the magnetic-head unit 14 comprises a head mount 16, which is preferably made of a plastics material. In this way the various parts of the head mount 16 can be manufactured accurately and can occupy a correct position relative to each other. The head mount 16 comprises a bottom wall 17, which, as shown in Fig. 4, has a recess 18 in its underside adjacent one edge, which recess in the assembled condition of the head unit 14 cooperates with a support 19 on the plate portion 15. Thus, the entry depth of the magnetic head in the direction of the magnetic-tape cassette 3 is defined. The plate portion 15 carries two further supports 20 and 21, which in the assembled condition of the magnetic-head unit 14 are situated one at each side of the head mount and engage the undersides of two mounting ridges 22 and 23 on the outer sides of the two upright side walls of the head mount, which ridges extend substantially perpendicularly to a plane which is tangential to the head face 28 at the location of the air gaps 29. Thus, the magnetic-head unit 14 is positioned relative to the head-mounting plate 7 by means of three contact points. For retaining the magnetic-head unit in this position two upstanding resilient chips 24 and 25 are provided on the plate portion 15, which chips snap over the mounting ridges 22 and 23 to clamp the head mount 16 to the supports 19, 20 and 21. The side walls of the head mount 16 are provided with another pair of ridges 26 and 27 above the ridges portions 22 and 23. These further ridges may be required if, for example due to lack of space within the housing 2, the bottom wall 17 of the head mount is situated closer to the head-mounting plate 7 and as a result the ridges 22 and 23 are too low for correct engagement by the chips 24 and 25. As can be seen in Fig. 3, the chips 24 and 25 are situated in the space between the pair of supports 20 and 21 and the support 19. Moreover, as the chips 24 and 25 are comparatively wide, the position of the head mount relative to the head-mounting plate 7 is defined in a stable manner when the head mount is clamped by the chips to the supports 19, 20 and 21, yet the head mount can be replaced simply.

The head mount 16 carries the magnetic head 9, which has a convexly curved head face 28, in the lower part of which air gaps 29 terminate. In the conventional manner the air gaps are formed by the spaces between adjacent polepieces (not shown) of the magnetic head. The head face 28, as is shown in Fig. 1, is curved cylindrically and at least near the air gaps 29 forms a guide surface on the magnetic head 9 for the magnetic tape 4. The magnetic head 9 comprises at its near side, which is the side remote from the head face 28, a plurality of contact pins 30, *via* which the magnetic head is electrically connected to other parts of the apparatus. The bottom wall 17 of the head mount 16 is formed on its upper side with a ridge 31 which constitutes a bearing that permits pivotal adjustment of the magnetic head 9. In this respect it is important that the bearing ridge 31 has its maximum height substantially midway between the upright side walls of the head mount 16. On the inner sides of these walls the head mount also comprises centring ridges 32 and 33, which similarly to the bearing ridge 31 extend substantially perpendicularly to a plane which is tangential to the head face 28 at the location of the air gaps 29. The centring ridges 32 and 33 are situated at a smaller distance from each other than the other parts of the upright side walls of the head mount 16. Preferably, the centring ridges 32 and 33 present some friction when the magnetic head is pivoted on the bearing ridge 31.

As can be seen in Figs. 2 and 4 the head mount 16 has four walls surrounding the magnetic head 9 at four sides, namely, the upper and lower sides and two upright sides. This ensures that the head mount has a great rigidity despite being made of a plastics material. In the planes of its two upright side walls the head mount 16 carries two tape guides 34 and 35 respectively, located one on each side of the air gaps 29 viewed in the direction of tape transport, which guides have cylindrically convexly curved guide surfaces 36 and 37 respectively, whose axes of curvature are parallel to a plane 44 which extends through the air gaps 29 and is situated at equal distances from the walls of the gaps, and are also parallel or nearly parallel to the plane which is tangential to the head face 28 at the location of the air gaps. At their upper ends the guide surfaces 36 and 37 adjoin height limiters 38 and 39 respectively, which height limiters are arranged for cooperation with the upper edge of the tape and are constructed as forward projections at the upper ends of the guide surfaces. Preferably, the surfaces of the height limiters which co-operate with the tape edge extend perpendicularly to the plane which is tangential to the head face at the location of the air gaps 29. At their lower ends the guide surfaces 36 and 37 adjoin tape control means in the form of control surfaces 40 and 41 respectively, formed by upwardly inclined surfaces on forward projections at the lower ends of the guide surfaces 36 and 37. The control surfaces 40 and 41 are inclined upwardly towards the guide surfaces 36 and 37 respectively so that the distance between each control surface and the associated height limiter decreases (see Fig. 3) towards the associated guide surface. The angle between each control surface 40 and 41 and a plane tangential to the two guide surfaces 36 and 37 is approximately 40 to 60°. The axial dimension of each guide surface from the associated control surface to the associated height limiter, which dimension is indicated by the reference numeral 42 in Fig. 3, is at most equal to a presented minimum tape width. Optional surface portions extending parallel to the height limiters 38 and 39 respectively may adjoin the lower ends of the control surfaces 41 and 42 respectively, the distance between these surface portions and the height limiters being at least equal to a prescribed maximum tape width.

The arrangements of the guide surfaces 34, 35 and control surfaces 40, 41 are preferably determined in accordance with the following principles. The guide surfaces 36, 37 should be cylindrically convexly curved surfaces arranged with their axes of curvature parallel to a plane through the air gaps 29 and, as will be described more fully below, parallel or nearly parallel to a plane tangential to the head face at the location of the gaps. The guide surfaces need not have a circular cylindrical curvature but may be any other smoothly rounded surfaces. The shape of the control surfaces 40, 41 with respect to that of the guide surfaces 36, 37 is such that the line of intersection of each guide surface and the adjoining control surface lies in a plane perpendicular to the axis of curvature of that guide surface. The control surfaces 40, 41 may be either cylindrically or conically convexly curved or may have any other smoothly rounded shape. In the case of guide and control surfaces which have circular cylindrical curvature, if S equals the radius of the control surface, $r$ is the radius of the guide surface, and $\alpha$ is the angle between planes tangential to the guide surface and the control surface, the radius S substantially satisfies the equation: $S = r/\sin \alpha$.

The head mount 16 can be made of a plastics material which is nickel-plated and covered with a wear-resistant layer, at least on the tape guides 34 and 35. For this layer, for example the material rhodium may be used, which is found to have suitable wear-resistance properties. The head mount may be made from a high-grade synthetic material having a high resistance to wear, a high dimensional stability and a low coefficient of friction, in which case plating is not necessary. An example of such a material is carbon-whiskers reinforced nylon. When the magnetic head 9 has been inserted in the head mount 16 in the assembly of the head unit 14, the head 9 is pivotally adjusted on the bearing ridge 31, preferably in a special alignment jig prior to mounting the head unit 14 in the cassette apparatus, so that a line 43 (see Fig. 2) which is tangential to the two guide surfaces 36 and 37 at the junctions between these surfaces and the height limiters 38 and 39 respectively extends perpendicularly to the plane 44 which extends through the air gaps 29 and is situated at equal distances from the walls of the gaps. When this adjustment has been completed, which is facilitated by the presence of the centring ridges 32 and 33, the magnetic head 9 is secured in the correct position relative to the mount by a suitable fixing material such as an adhesive. The adhesive is applied in the spaces between the magnetic head and the upright side walls of the head mount. After the adjustment the magnetic head 14 is ready for mounting in the apparatus. The presence of the mounting means in the form of the mounting ridges 22 and 23 and the clamping means in the form of the resilient chips 24 and 25 greatly simplifies the mounting of the magnetic-head unit 14. The advantage of this mounting method is that replacing the magnetic-head unit is also a simple operation, so that the costs of replacing a magnetic head are reduced.

It has been found that the control surfaces 40 and 41 should preferably be located near the lower side of the magnetic head because the air gaps 29 are also situated in the lower part of the head face 28 and in this way the tracks on the magnetic tape, in particular the lower track, are defined in the most accurate manner. Moreover, it has been found that many magnetic-tape-cassette apparatuses comprise capstans which do not extend perfectly perpendicularly to the head-mounting plate and tend to move the magnetic tape downwards relative to the magnetic head. However, the control surfaces and the height limiters may alternatively be arranged the other way round, i.e. with the control surface at the upper ends of the guide surfaces 36 and 37 and the height limiters at the lower ends. This arrangement also provides an accurate azimuth position of the magnetic head relative to a tape moving across this head.

The supports 19, 20 and 21 and the resilient chips 24 and 25 can be formed on a metal head-mounting plate 7 by outsert-moulding. However, in the case of tape decks having a plastics head-mounting plate 7 said supports and chips may be moulded integrally with the head-mounting plate, so that a very small mounting height is obtained.

In the embodiment shown in Figs. 5 and 6 a head mount 45 is used which comprises mounting ridges 22, 23 and 26, 27 on the outer sides of the upright side walls of the mount. Further parts of the head mount 45 which correspond to parts of the head mount 16 in the preceding embodiment bear corresponding reference numerals. On the inner sides of the upright side walls of the head mount 45 two centring ridges 46 and 47 respectively are provided, which ridges exert some friction on the magnetic head 9 during the pivotal adjustment of the head. As is shown in Fig. 5, the centring ridges 46 and 47 may alternatively be arranged at some distance from the bottom wall 50 of the head mount 45. Channels 48 and 49 are formed in the inner sides of the side walls of the mount, which channels extend from top to bottom of the side walls and are slightly widened at their upper ends. These channels serve to facilitate the application of the adhesive or other fixing agent after the adjustment of the magnetic head. Again it will be evident that enough clearance should be left between the upright side walls of the head mount and the magnetic head for the adjustment of this head. This is even more important if, as in the present embodiment, the head mount 45 is U-shaped in which case the upright side walls would be deflected if the clearance were inadequate, which is undesirable.

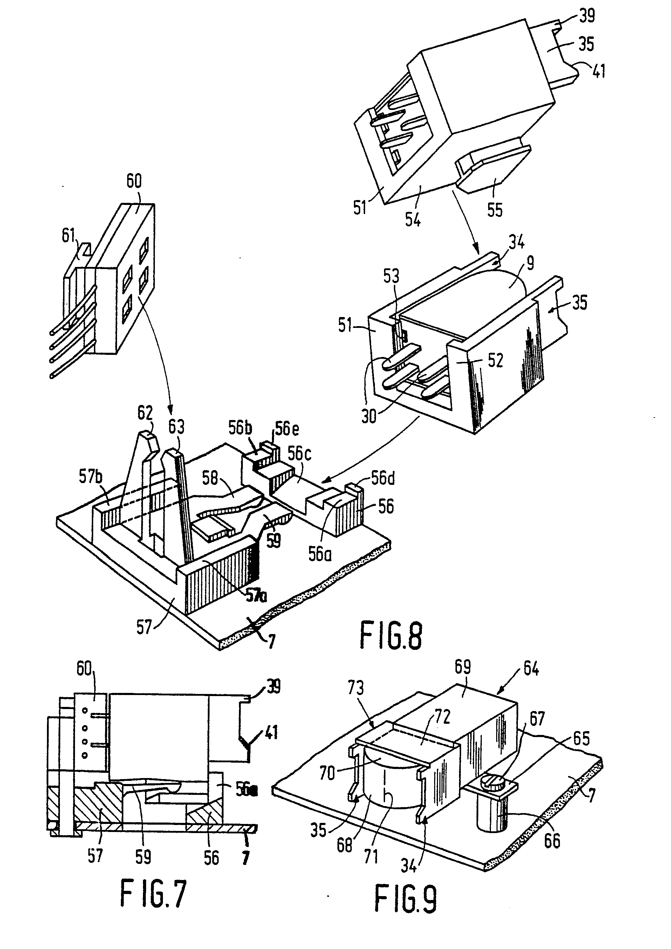

In the embodiment shown in Figs. 7 and 8, a U-shaped magnetic-head mount 51 carries the magnetic head 9. The head mount 51 comprises parts which are of similar construction to parts of the head mount 16 in the first embodiment and which bear the same reference numerals. It is to be noted that, as is shown in Fig. 7, the guide surfaces 36 and 37 of the tape guides 34 and 35 respectively may be inclined at a small acute angle of, for example, 2 to 3 degrees relative to a plane tangential to the head face 28 at the location of the air gaps 29. This has the advantage that if there is a slight wear of the control surfaces 40 and 41 after prolonged use, the magnetic tape will still move over the guide surfaces 36 and 37 in a position substantially parallel to said plane which is tangential to the head face.

At its side which is remote from the head face 28 the head mount 51 comprises stop portions 52 and 53 which define the position of the magnetic head in a direction perpendicular to the plane which is tangential to the head face at the location of the air gaps. These stop portions further simplify the adjustment of the magnetic head 9 in the mount 51. On the lower side of its bottom wall 54 the head mount 51 comprises a T-shaped projection 55 which forms a means for securing the head mount to the head-mounting plate. For this purpose the head-mounting plate 7 is provided with two supporting members 56 and 57. At their upper sides the supporting members 56 and 57 comprise supports 56a, 56b and 57a, 57b, on which the bottom wall 54 bears in the mounted position of the magnetic-head unit. The supporting member 57 is provided with two resilient chips 58 and 59 which in the mounted position of the magnetic-head unit co-operate with the projection 55 on the head mount 51 to clamp the head mount to the supports 56a, 56b and 57a, 57b. An oblique supporting surface 56c on the supporting member 56 and the action of the resilient chips 58 and 59 ensure that the magnetic-head unit is correctly positioned relative to the head-mounting plate 7 once it has been mounted. In this respect it is also important that the supporting member 56 comprises raised edges 56d and 56e, which define the position of the magnetic-head unit in a direction perpendicular to said plane which is tangential to the head face. For the electrical connection of the magnetic head 9 there is provided a terminal block 60 with a T-shaped projection 61 which can be clamped between resilient limbs 62 and 63 which are connected to the head-mounting plate 7. On the inner side the head mount 51 is provided, in a manner not shown, with centring ridges and a bearing ridge similar to those in the preceding embodiments, for the adjustment of the magnetic head 9. By making the head mount 51 and the supporting members 56 and 57 and the terminal block 60 of a plastics a magnetic-head unit is obtained which in co-operation with parts on the head-mounting plate 7 can be mounted on the head-mounting plate 7 in a cheap yet accurate manner. It is to be noted that the use of a terminal block 60 for the electrical contacts 30 is also possible in the preceding embodiments, in which case resilient limbs similar to the limbs 62 and 63 must be provided on the head-mounting plate 7.

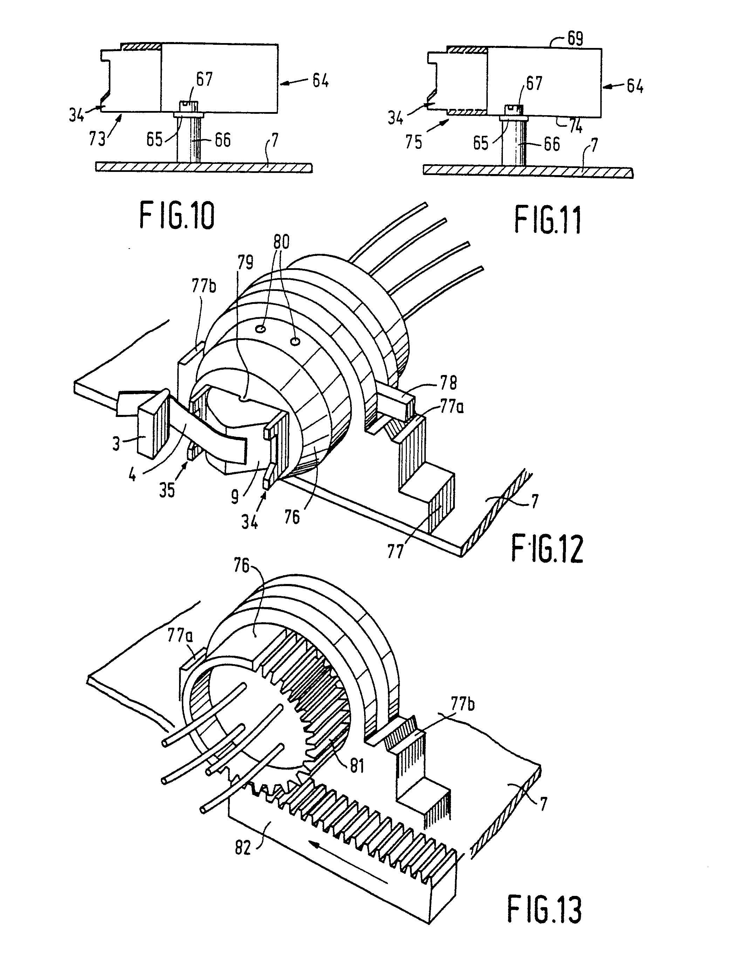

In the embodiment shown in Figs. 9 and 10 a magnetic-head fixture of a conventional type is used. A magnetic head 64 is mounted on a support 65, whose position above the head-mounting plate 7 is defined by spacers 66 and which is secured to the plate 7 by means of screws 67. The upper side 69 of the magnetic head 64 extends substantially parallel to the head-mounting plate and is stepped, for example, by grinding, to form adjacent the head face 68 a portion 70 which lies in a plane which is disposed at a smaller distance from the air gaps 71 than the plane of the remainder of the upper side 69 of the magnetic head. This stepped portion accommodates a top wall 72 of a head mount 73, at least part of the wall 72 engaging with the stepped portion 70 in the mounted position of the head mount 73. The head mount 73 is of inverted U-shape and on its two side walls it comprises tape guides 34 and 35 similar to those in the preceding embodiments. The adjustment of the head 64 is effected in the same way as in the preceding embodiments, which can be facilitated by providing the head mount 73 also with centring ridges and a bearing ridge. A basic difference is that the head mount 73 in the present embodiment only provides the correct positioning of the magnetic tape relative to the air gaps 71, thereby ensuring that the tracks are located at the correct height and keeping the azimuth position of the magnetic tracks perpendicular to the median plane through the air gaps 71. The head mount 73 has the advantage that it does not increase the overall height of the magnetic head 64 measured perpendicularly to the head-mounting plate 7, so that the magnetic-head unit consisting of the magnetic head 64 and the mount 73 can be fitted in existing constructions without any problems.

Figure 11 shows a modification of the embodiment of Figs. 9 and 10 in which the magnetic head 64 is stepped on its lower side 74 as well as its upper side 69 to enable a head mount 75 having a bottom wall as well as a top wall to be slid over the magnetic head 64 to surround the magnetic head on four sides. The advantage of this is that this leads to a more rigid construction of the head mount.

In the embodiment shown in Figs. 12 and 13 a head mount 76 comprising a cylindrical body is rotatably mounted on the head-mounting plate 7 in a bearing block 77 which comprises two stops 77a and 77b, between which a projection 78 which is rigidly connected to the head mount 76 can rotate through 180°. A magnetic head 9 is mounted in an opening in the head mount 76 in a manner similar to that in which the head 9 is mounted in the head mount 16 in the first embodiment, for which purpose the head mount 76 also comprises a ridge 79 which serves as a bearing ridge for the pivotal adjustment of the magnetic head and centring ridges (not shown) are provided in the head mount 76. For the adjustment of the magnetic head 9 in the head mount 76 the latter is formed with holes 80 through which pins of an adjustment device can be passed. On its rear side the head mount is provided with a series of teeth 81 which extend through substantially 180° and which mesh with a toothed rack 82. The rack 82 is actuated by an actuating mechanism, not shown, in the magnetic-tape-cassette apparatus. This results in a magnetic-head unit which is particularly suitable for playing-back both the first and the second side of the magnetic-tape cassette without the necessity of reversing the cassette 3. When the end of the magnetic tape 4 is reached, the rack 82 is actuated to turn the magnetic-head unit through 180°, so that after reversal of the transport direction of the magnetic tape, recordings can be made on or played back from the two other tracks of the magnetic tape. This yields the advantage that by means of the magnetic-head unit in accordance with the invention the height position of the tracks and the azimuth position of the tracks relative to the air gaps is defined accurately in both directions of tape transport. Since the head mount 76 and the bearing block 77 can be made of a plastics material this construction may be incorporated in a magnetic-tape-cassette apparatus in a simple cheap manner.

**Claims**

1. A magnetic tape cassette apparatus (1) comprising:
a head mounting plate (7);
a magnetic head unit (14) carried on said plate (7), said unit (14) comprising a magnetic head (9; 64) having a cylindrically curved head face (28, 68) in which at least one air gap (29; 71) terminates; said magnetic head unit further comprising
a head mount (16; 45; 51; 73; 76; 75) including two tape guides (34, 35), arranged one to each side of the air gap (29; 71) in the direction of tape transport, said guides (34, 35) each having a cylindrically curved guide surface (36, 37) and a height limiter (38, 39) at an axial end of the guide surface (36, 37) said height limiters (38, 39) adjoining the respective guide surfaces (36, 37) along a line (43) through the two height limiters (38, 39) said line (43) being perpendicular to a plane (44) through the air gap (29; 71) perpendicular to the head face (28; 68) at the air gap (29; 71) and control means (40, 41) disposed at the other axial ends of the guide surfaces (36, 37) for guiding a lateral tape edge so as to cause the other lateral tape edge to be maintained in constant contact with the respective height limiter (38, 39) during tape transport; and
means (10, 13) for transporting a magnetic tape (4) past said magnetic head (9; 64) and over said tape guides (34, 35),
characterized in that
— said control means comprise an obliquely disposed control edge (40, 41) adjoining each of the respective guide surfaces (36, 37) arranged such that the distance from the control edge (40, 41) of the tape guide (34, 35) to the respective height limiter (38, 39) decreases in a direction toward the guide surface (36, 37);
— each guide surface (36, 37) has a maximum axial dimension, from the height limiter (38, 39) to the intersection of the control edge (40, 41) with the guide surface (36, 37) which equals the minimum width of the magnetic tape (4); and
— said control edges (40, 41), guide surfaces (36, 37) and height limiters (38, 39) form an integral unit with the head mount (16; 45; 51; 73; 75; 76).

2. An apparatus as claimed in claim 1, characterized in that the control edge is formed by a smoothly curved convex surface (40, 41) which has a radius relative to the radius of the guide surface (36, 37) such that the radius S is substantially satisfying the equation: $S = r/\sin \alpha$, where S is the control edge radius, r is the guide surface radius, and $\alpha$ is the angle between planes tangential to the guide surface (36, 37) and the control edge (40, 41). (Figs. 2—13).

3. An apparatus as claimed in claim 1 or 2, characterized in that the head mount (45) comprises a base portion (17) and two side walls, said side walls being upright relative to said plate (7) and comprising centring edges (46, 47) of the facing sides of the walls, said centring edges (46, 47) extending substantially perpendicular relative to a plane tangent to the head face (28) at the location of the air gap (29) and disposed at a distance from each other which is smaller than that between other portions of said side walls. (Figs. 5, 6).

4. An apparatus as claimed in any of the preceding claims, characterized in that said head mount (16; 45; 51; 73; 75; 76), guide surfaces (36, 37), height limiters (38, 39) and control edges (40, 41) are formed by a unitary plastic molding, and said magnetic head (9; 64) is retained in position within said head mount by glue (Figs. 2—13).

5. An apparatus as claimed in claim 4, characterized in that at least at the location of the tape guides (34, 35), the head mount molding is covered with a wear resistant layer, thereby prolonging the corrective effect of the height limiters (38, 39) and control edges (40, 41) (Figs. 2—13).

6. An apparatus as claimed in any of the preceding claims, characterized in that the head mounting plate (7) comprises elastic clamping means (24, 25; 58, 59), and the head mount (16; 45; 51) comprises fixing members (22, 23; 26, 27; 55) arranged for engagement by said elastic clamping means to fix the head mount (16; 45; 51) to the plate (7). (Figs. 2—8).

7. An apparatus as claimed in claim 6, characterized in that said plate (7) includes three spaced supports (19, 20, 21), and said elastic clamping means comprises two clamping hooks (24, 25); a first (20) and a second (21) of said supports being disposed one to each side of the head mount (16) near said hooks (24, 25) and the third support (21) being disposed to the other side of said mount (16) remote from the head face (28) and the hooks (24, 25); and the fixing members on the head mount (16) comprising members having mounting edges (26, 27) extending substantially perpendicular to a plane tangent to the head face (28), said clamping hooks (24, 25) engaging over said mounting edges (26, 27) (Figs. 2—6).

8. An apparatus as claimed in any of the preceding claims, characterized in that the head mount (76) is mounted to the head mounting plate (7) by means (77) for rotating the head mount (76) about an axis perpendicular to a plane tangent to the head face, through a range of rotation of 180°; and said mounting means (77) includes two stops (77a, 77b) for defining limits of said range of rotation (Figs. 12, 13).

9. An apparatus as claimed in any of the preceding claims, characterized in that the magnetic head (64) has a wall (69) extending substantially parallel to said plate (7), said wall (69) having a wall portion (70) disposed at a smaller distance from the head air gap (71) than the rest of said wall (69); and said head mount (73; 75) comprises a base portion (72) positioned at least partly against said wall portion (70). (Figs. 9—11).

10. An apparatus as claimed in any of the preceding claims, characterized in that, viewed perpendicularly to a plane tangent to the head face (28; 68) at the location of the air gap (29; 71), the head mount (16; 75; 76) surrounds the magnetic head (9; 64) on four sides. (Figs. 2—4, 11—13).

11. A magnetic head unit (14) suitable for use in a magnetic-tape cassette apparatus (1) as claimed in claim 1.

**Patentansprüche**

1. Magnetbandkassettengerät (1) mit
einer Kopfbefestigungsplatte (7);
einer Magnetkopfeinheit (14) auf der genannten Platte (7), wobei diese Einheit (14) einen Magnetkopf (9; 64) aufweist mit einer zylinderförmig gekrümmten Bandkontaktfläche (28; 68), in der wenigstens ein Luftspalt (29; 71) mündet; wobei die genannte Magnetkopfeinheit weiterhin die folgenden Teile aufweist:
eine Kopfhalterung (16; 45; 51; 73; 76; 75), die zwei Bandführungselemente (34, 35) aufweist, die in der Richtung des Bandtransportes je auf einer Seite des Luftspaltes (29; 71) vorgesehen sind, wobei diese Bandführungselemente (34, 35) je eine zylinderförmig gekrümmte Führungsfläche (36, 37) aufweisen sowie einen Höhenbegrenzer (38, 39) an einem axialen Ende der Führungsfläche (36, 37), wobei diese Höhenbegrenzer (38, 39) an die betreffenden Führungsflächen (36, 37) grenzen und zwar längs einer Linie (43) durch die zwei Höhenbegrenzer (38, 39), wobei diese Linie (43) senkrecht auf einer Ebene (44) durch den Luftspalt (29; 71) senkrecht auf der Bandkontaktfläche (28; 68) bei dem Luftspalt (29; 71) geht, sowie Steuermittel (40, 41), die an den anderen axialen Enden der Führungsflächen (36, 37) vorgesehen sind und zwar zum Führen einer Bandkante, damit die andere Bandkante während des Bandtransportes mit dem betreffenden Höhenbegrenzer (38, 39) in Berührung bleibt; und
Mitteln (10, 13) zum Transportieren eines Magnetbandes (4) an dem genannten Magnetkopf (9; 64) entlang sowie über die genannten Bandführungselemente (34, 35),
dadurch gekennzeichnet, dass
— die genannten Steuermittel einen schräg vorgesehenen Steuerrand (40, 41) aufweisen, der an jede der betreffenden Führungsflächen (36, 37) grenzt und derart angeordnet ist, dass der Abstand zwischen dem Steuerrand (40, 41) des Bandführungselementes (34, 35) und dem betreffenden Höhenbegrenzer (38, 39) in einer Richtung zu der Führungsfläche (36, 37) hin abnimmt;
— jede Führungsfläche (36, 37) eine maximale axiale Abmessung von dem Höhenbegrenzer (38, 39) zu dem Schnittpunkt des Steuerrandes (40, 41) mit der Führungsfläche (36, 37) hat, wobei diese maximale axiale Abmessung der minimalen Breite des Magnetbandes (4) entspricht; und
— die genannten Steuerränder (40, 41), Führungsflächen (36, 37) und Höhenbegrenzer (38, 39) einen einheitlichen Teil mit der Kopfhalterung (16; 45; 51; 73; 75; 76) bildet.

2. Gerät nach Anspruch 1, dadurch gekennzeichnet, dass der Steuerrand durch eine leicht gekrümmte konvexe Fläche (40, 41) gebildet wird, die einen Radius aufweist, der zu dem Radius der Führungsfläche (36, 37) derart ist, dass der Radius S der folgenden Gleichung nahezu entspricht: S = r/sin α, wobei S der Radius des Steuerrandes ist, r der Radius der Führungsfläche ist und wobei α den Winkel zwischen Ebenen darstellt, die sich tangentiell zu der Führungsfläche (36, 37) und dem Steuerrand (40, 41) erstrecken (Fig. 2—13).

3. Gerät nach Anspruch 1 oder 2, dadurch gekennzeichnet, dass die Kopfhalterung (45) einen Bodenteil (17) und zwei Seitenwände aufweist, wobei die genannten Seitenwände gegenüber der genannten Platte (7) aufrecht stehen und Zentrierungsränder (46, 47) der einander zugewandten Seiten der Wände aufweisen, die sich im wesentlichen senkrecht zu einer Berührungsebene an der Kopffläche (28) erstrecken, und zwar an der Stelle des Luftspaltes (29) und in einem Abstand voneinander vorgesehen sind, der kleiner ist als der zwischen anderen Teilen der genannten Seitenwände. (Fig. 5, 6).

4. Gerät nach einem der vorstehenden Ansprüche, dadurch gekennzeichnet, dass die genannte Kopfbehalterung (16; 45; 51; 73; 75; 76), die Führungsflächen (36, 37), die Höhenbegrenzer (38, 39) und die Steuerränder (40, 41) durch einen einzigen Kunststoffteil gebildet sind, wobei der genannte Magnetkopf (9, 64) innerhalb der genannten Kopfhalterung durch Klebstoff am Platz gehalten wird. (Fig. 2—13).

5. Gerät nach Anspruch 4, dadurch gekennzeichnet, dass wenigstens an der Stelle der Bandführungselemente (34, 35) die Kunststoffkopfhalterung mit einer verschleissfesten Schicht bedeckt ist, wodurch der korrigierende Effekt der Höhenbegrenzer (38, 39) und der Steuerränder (40, 41) verlängert wird. (Fig. 2—13).

6. Gerät nach einem der vorstehenden Ansprüche, dadurch gekennzeichnet, dass die Kopfbefestigungsplatte (7) federnde Klemmittel (24, 25; 58, 59) und die Kopfhalterung (16; 45; 51) Befestigungselemente (22; 23; 26; 27; 55) aufweist, die zum Fixieren der Kopfhalterung (16; 45; 51) auf der Platte (7) mit den genannten federnden Klemmitteln zusammenarbeiten. (Fig. 2—8).

7. Gerät nach Anspruch 6, dadurch gekennzeichnet, dass die Platte (7) drei in einem Abstand voneinander liegende Träger (19, 20, 21) aufweist und die genannten federnden Klemmittel zwei Klemmhaken (24, 25); wobei ein erster (20) und ein zweiter (21) Träger der genannten Träger an je einer Seite des Kopfbefestigungselementes (16) in der Nähe der genannten Haken (24, 25) vorgesehen sind und wobei der dritte Träger (21) auf der anderen Seite des genannten Elementes (16) in einem Abstand von der Bandkontaktfläche (28) und der Haken (24, 25) vorgesehen ist; und wobei die Befestigungselemente auf dem Kopfbefestigungselement (16) Teile aufweisen, die mit Befestigungsrändern (26, 27) versehen sind, die sich im wesentlichen senkrecht zu einer Berührungsfläche mit der Bandkontaktfläche (28) erstrecken, wobei die genannten Klemmhaken (24, 25) bis über die genannten Befestigungsränder (26, 27) hinausragen. (Fig. 2—6).

8. Gerät nach einem der vorstehenden Ansprüche, dadurch gekennzeichnet, dass das Kopfbefestigungselement (76) durch Mittel (77) auf der Kopfbefestigungsplatte (7) angeordnet ist und zwar zum Drehen des Kopfbefestigungselementes (76) um eine Achse, die sich über einen Drehbereich von 180° senkrecht zu einer Berührungsebene mit der Bandkontaktfläche erstreckt, und wobei die genannten Befestigungsmittel (77) zwei Anschläge (77a, 77b) aufweisen zum Beschränken des genannten Drehbereiches. (Fig. 12, 13).

9. Gerät nach einem der vorstehenden Ansprüche, dadurch gekennzeichnet, dass der Magnetkopf (64) eine Wand (69) aufweist, die sich im wesentlichen parallel zu der genannten Platte (7) erstreckt, wobei diese Wand (69) einen Wandteil (70) aufweist, der in einem geringeren Abstand von dem Luftspalt (71) liegt als der restliche Teil der genannten Wand (69) und dass das genannte Kopfbefestigungselement (73; 75) einen Basisteil (72) aufweist, der wenigstens teilweise an dem genannten Wandteil (70) angeordnet ist. (Fig. 9—11).

10. Gerät nach einem der vorstehenden Ansprüche, dadurch gekennzeichnet, dass senkrecht zu einer Berührungsebene mit der Bandkontaktfläche (28; 68) an der Stelle des Luftspaltes (29; 71) gesehen das Kopfbefestigungselement (16; 75; 67) den Magnetkopf (9; 64) an vier Seiten umgibt. (Fig. 2—4, 11—13).

11. Magnetkopfeinheit (14) zum Gebrauch in einem Magnetbandkassettengerät (1) nach Anspruch 1.

**Revendications**

1. Appareil à cassette de bande magnétique (1) comprenant:
une plaque porte-têtes (7),
une unité de tête magnétique (14) montée sur la plaque (7), cette unité (14) comprenant une tête magnétique (9; 64) comportant une face de tête courbée de manière cylindrique (28; 68) dans laquelle se termine au moins un entrefer (29; 71), l'unité de tête magnétique comprenant, en outre:
une monture de tête (16; 45; 51; 73; 76; 75) comprenant deux guides de bande (34, 35), disposés respectivement de part et d'autre de l'entrefer (29; 71) dans le sens de défilement de la bande, les guides (34, 35) comportant chacun une surface de guidage courbée de manière cylindrique (36, 37) et un limiteur de hauteur (38, 39) à une extrémité axiale de la surface de guidage (36, 37), les limiteurs de hauteur (38, 39) étant adjacents aux surfaces de guidage respectives (36, 37) suivant une ligne (43) passant par les deux limiteurs de hauteur (38, 39), la ligne (43) étant perpendiculaire à un plan (44) passant par l'entrefer (29; 71) perpendiculaire à la face de tête (28; 68) au niveau de l'entrefer (29; 71) et des moyens de commande (40, 41) disposés aux autres extrémités axiales des surfaces de guidage (36, 37) pour guider un bord latéral de la bande, de manière à provoquer le maintien de l'autre bord latéral de la bande en contact constant avec le limiteur de hauteur respectif (38, 39) pendant le défilement de la bande, et

des moyens (10, 13) pour transporter une bande magnétique (4) en regard de la tête magnétique (9; 64) et par-dessus les guides de bande (34, 35),

caractérisé en ce que

— les moyens de commande comprennent un bord de commande oblique (40, 41) adjacent chaque fois à une des surfaces de guidage respectives (36, 37) et disposé de telle sorte que la distance séparant le bord de commande (40, 41) du guide de bande (34, 35) du limiteur de hauteur (38, 39) respectif aille en diminuant dans un sens dirigé vers la surface de guidage (36, 37);

— chaque surface de guidage (36, 37) a une dimension axiale maximum, depuis le limiteur de hauteur (38, 39) jusqu'à l'intersection du bord de commande (40, 41) avec la surface de guidage (36, 37), qui est égale à la largeur minimum de la bande magnétique (4), et

— les bords de commande (40, 41), les surfaces de guidage (36, 37) et les limiteurs de hauteur (38, 39) forment une unité d'une pièce avec la monture de tête (16; 45; 51; 73; 75; 76).

2. Appareil suivant la revendication 1, caractérisé en ce que le bord de commande est formé par une surface convexe à courbure régulière (40, 41) qui présente un rayon tel par rapport au rayon de la surface de guidage (36, 37) que le rayon S satisfasse en substance à l'équation: $S = r/\sin \alpha$, où S est le rayon du bord de commande, r est le rayon de la surface de guidage, et $\alpha$ est l'angle entre des plans tangentiels à la surface de guidage (36, 37) et au bord de commande (40, 41). (Fig. 2 à 13).

3. Appareil suivant la revendication 1 ou 2, caractérisé en ce que la monture de tête (45) comprend une embase (17) et deux parois latérales, les parois latérales étant verticales par rapport à la plaque (7) et comprenant des bords de centrage (46, 47) sur les côtés des parois qui se font face, ces bords de centrage (46, 47) s'étendant en substance perpendiculairement à une plan tangent à la face de tête (28) au niveau de l'entrefer (29) et étant disposés à une distance l'un de l'autre qui est inférieure à la distance séparant d'autres parties des parois latérales. (Fig. 5 et 6).

4. Appareil suivant l'une quelconque des revendications précédentes, caractérisé en ce que la monture de tête (16; 45; 51; 73; 75; 76), les surfaces de guidage (36, 37), les limiteurs de hauteur (38, 39) et les bords de commande (40, 41) sont formés par une pièce moulée d'un bloc en matière plastique et la tête magnétique (9; 64) est retenue en place dans la monture de tête par un adhésif. (Fig. 2 à 13).

5. Appareil suivant la revendication 4, caractérisé en ce qu'au moins au niveau des guides de bande (34, 35), la monture de tête moulée est couverte d'une couche résistant à l'usure, ce qui prolonge l'effet correcteur des limiteurs de hauteur (38, 39) et des bords de commande (40, 41). (Fig. 2 à 13).

6. Appareil suivant l'une quelconque des revendications précédentes, caractérisé en ce que la plaque porte-têtes (7) comprend des moyens de serrage élastiques (24, 25; 58, 59) et la monture de tête (16; 45; 51) comprend des organes de fixation (22, 23; 26, 27; 55) propres à être agrippés par les moyens de serrage élastiques pour fixer la monture de tête (16; 45; 51) à la plaque (7). (Fig. 2 à 8).

7. Appareil suivant la revendication 6, caractérisé en ce que la plaque (7) comprend trois supports espacés (19, 20, 21) et les moyens de serrage élastiques comprennent deux crochets de serrage (24, 25); un premier support (20) et un deuxième support (21) étant disposés respectivement de part et d'autre de la monture de tête (16) près des crochets (24, 25) et le troisième support (21) étant disposé de l'autre côté de la monture (16) éloigné de la face de tête (28) et des crochets (24, 25), et les organes de fixation sur la monture de tête (16) comprennent des organes comportant des bords de montage (26, 27) qui s'étendent en substance perpendiculairement à un plan tangent à la face de tête (28), les crochets de serrage (24, 25) s'accrochant par-dessus les bords de montage (26, 27). (Fig. 2 à 6).

8. Appareil suivant l'une quelconque des revendications précédentes, caractérisé en ce que la monture de tête (76) est montée sur la plaque porte-têtes (7) par des moyens (77) permettant de faire tourner la monture de tête (76) autour d'un axe perpendiculaire à un plan tangent à la face de tête, d'un secteur de rotation de 180°, et les moyens de montage (77) comprennent deux arrêts (77a, 77b) définissant les limites du secteur de rotation (Fig. 12 et 13).

9. Appareil suivant l'une quelconque des revendications précédentes, caractérisé en ce que la tête magnétique (64) comporte une paroi (69) qui s'étend en substance parallèlement à la plaque (7), cette paroi (69) comportant une partie de paroi (70) disposée à une plus courte distance de l'entrefer (71) de la tête que le reste de la paroi (69) et la monture de tête (73; 75) comprend une embase (72) positionnée au moins partiellement contre la dite partie de paroi (70). (Fig. 9 à 11).

10. Appareil suivant l'une quelconque des revendications précédentes, caractérisé en ce que, vue perpendiculairement à un plan tangent à la face de tête (28; 68) au niveau de l'entrefer (29; 71), la monture de tête (16; 75; 76) entoure la tête magnétique (9; 64) de quatre côtés. (Fig. 2 à 4, 11 à 13).

11. Unité de tête magnétique (14) propre à être utilisée dans un appareil à cassette de bande magnétique (1) suivant la revendication 1.

FIG.1

1

FIG. 2

FIG.3A

FIG. 3

FIG.4

FIG. 5

FIG.6

FIG.8

FIG.7

FIG.9

FIG.10

FIG.11

FIG.12

FIG.13